# EUROPÄISCHE PATENTSCHRIFT

(11) **EP 3 166 746 B1**
(45) Veröffentlichungstag und Bekanntmachung des Hinweises auf die Patenterteilung: **13.02.2019**
(21) Anmeldenummer: 15747365.3
(22) Anmeldetag: 22.06.2015
(51) Int. Cl.: B23K 20/12

(54) **VERFAHREN UND VORRICHTUNG ZUM SCHNELLEN UND SICHEREN WERKZEUGWECHSEL BEI DEM VORGANG DES RÜHRREIBSCHWEISSENS**
METHOD AND DEVICE FOR QUICK AND RELIABLE TOOL CHANGING IN THE PROCESS OF FRICTION STIR WELDING
PROCÉDÉ ET DISPOSITIF DE CHANGEMENT RAPIDE ET FIABLE D'OUTIL LORS D'UNE PROCÉDURE DE SOUDAGE PAR FRICTION-MALAXAGE

(30) Priorität: 07.07.2014 DE 102014010058
(43) Veröffentlichungstag der Anmeldung: 17.05.2017
(73) Patentinhaber: Grenzebach Maschinenbau GmbH, 86663 Asbach-Baeumenheim (DE)
(72) Erfinder: WEIGL, Markus, 86609 Donauwörth (DE)
(74) Vertreter: Kindermann, Peter
(86) Internationale Anmeldenummer: PCT/DE2015/000307
(87) Internationale Veröffentlichungsnummer: WO 2016/004912

(56) Entgegenhaltungen:
- DE-U1-202014 003 072
- US-A1- 2007 295 781

## Beschreibung

Die Erfindung betrifft ein Verfahren und eine Vorrichtung zum schnellen Werkzeugwechsel bei dem Vorgang des Rührreibschweißens.

Anfang der neunziger Jahre des vorigen Jahrhunderts wurde das Rührreibschweißen, oder auch Reibrührschweißen genannt, entwickelt. Das Rührreibschweißen wird unter anderem für das Schweißen von Aluminiumlegierungen mittlerweile in vielen relevanten Industriebereichen erfolgreich eingesetzt. Die Anwendungen reichen hierbei von Einzelstücken und Kleinserien bis hin zu größeren Serien.

Zum wirtschaftlichen Erfolg tragen neben der hervorragenden Güte der Schweißnaht auch die hohe Reproduzierbarkeit und die geringen Vorbereitungsarbeiten und Aufwendungen zur Nachbearbeitung bei. Dieses Verfahren lässt sich sehr gut automatisieren und erlaubt eine Qualitätsüberwachung auf der Basis einer Maschinenüberwachung. Beim Rührreibschweißen wird im Fügebereich der zu verbindenden Materialien mittels der Reibung zwischen einem rotierenden, gleichzeitig translatorisch bewegten und mit Druck aufgebrachten, Werkzeug Reibungswärme erzeugt. Das Werkzeug wird entlang des Fügebereichs bewegt und verrührt das plastifizierte Material im Inneren der Naht der zu verbindenden aneinander stoßenden Materialien. Der aufgebrachte Druck presst das plastifizierte Material zusammen. Am Ende dieser Naht wird das Werkzeug aus dem Verbindungsbereich herausgezogen und die Schweißnaht ist unmittelbar belastbar. Zum Stand der Technik werden folgende Druckschriften genannt:
Aus der DE 20 2012 103 219 U1 ist eine Pressschweißvorrichtung bekannt, der die Zielsetzung zugrunde liegt, eine verbesserte Prozessschweißtechnik, insbesondere Reibschweißtechnik, aufzuzeigen als beim bekannten Stand der Technik. Hierzu wird im Oberbegriff des Anspruchs 1 von einer Prozessschweißvorrichtung mit einer Plastifizierungseinrichtung und einer Staucheinrichtung zur Herstellung einer Schweißverbindung zwischen Werkstückteilen ausgegangen, wobei die Prozessschweißvorrichtung eine um eine Rotationsachse rotierbare Spannvorrichtung mit einem Drehantrieb für ein erstes Werkstückteil und eine weitere Spannvorrichtung aufweist.

Aus der den Oberbegriff der Patentansprüche 1 und 6 bildenden Druckschrift US 2007/295781 A1 ist eine Vorrichtung und ein Verfahren zum schnellen und sicheren Werkzeugwechsel bei dem Vorgang des Rührreibschweißens bekannt, wobei ein Roboter aus einem Werkzeug-Magazin einen bestimmten, für den folgenden Schweißvorgang geeigneten, Reibschweißkopf für ein, auf einer Universal-Spannvorrichtung aufgespanntes Werkstück auswählt, das Werkzeug-Magazin anfährt, sich mittels einer Werkzeugaufnahme und einer Andockplatte mit dem betreffenden Reibschweißkopf verbindet, und nach Beendigung des Reibschweißvorgangs der Roboter den betreffenden Reibschweißkopf von dem Werkstück entfernt und den Reibschweißkopf wieder in das Werkzeug-Magazin zurücklegt.

Ferner ist aus der Druckschrift DE 20 2014 003 072 U1 eine Vorrichtung zur Erfassung der mechanischen Kräfte an einer Schweißpin-Spitze bei dem Vorgang des Rührreibschweißens bekannt.

Aus der, auf die Anmelderin zurückgehenden, DE 10 2012 010 836 B3 sind ein Verfahren und eine Vorrichtung zur Verbesserung der Qualität der Schweißnaht beim Rührreibschweißen bekannt, der die Zielsetzung zugrunde liegen, die Standzeit des Rührreibwerkzeugs von ca. 2 Stunden auf 15 Stunden zu erhöhen und die Qualität der Fügenaht so zu erhöhen, dass keinerlei Nachbearbeitung erforderlich ist. Dies wird erreicht mit einer Vorrichtung mit den folgenden Merkmalen:
a) einer Aufnahmeplatte mit einem Antriebskopf und einem Spindellager zur Aufnahme einer Reibschweißspitze, wobei im Spindellager eine spiralförmig ausgearbeitete Transportschnecke die zum Abtransport von nicht benötigtem Material-Auftrag dient, in schräg nach außen führende Öffnungen mündet,
b) die Längssachse des Spindellagers ist gegen die Vertikale in einem Winkel von 2,8 bis 3,2 Grad geneigt,
c) die Gleitfläche der Drehspindel besteht aus einer ebenen Gleitfläche und besonders zur Verschweißung von kurvenförmigen Nähten aus jeweils einer, auf zwei gegenüber liegenden Seiten anschließenden, zur Gleitfläche in einem spitzen Winkel geneigten, in sich gewölbten Gleitfläche,
d) die Reibschweißspitze weist die Form eines Kegelstumpfes auf bei dem die Deckfläche in der Mitte erhöht ist, und wobei die Mantelfläche des Kegelstumpfes durch sechs trapezförmige Flächenstücke gebildet wird von denen drei Flächenstücke jeweils am Umfang gleichmäßig verteilt sich in einem Winkel von 120 Grad gegenüber liegen und einen größeren Anteil als 1/6 am Kreisumfang beanspruchen.

Zur exakten Steuerung des axialen Anpressdrucks und des auftretenden Drehmoments beim Rührreibschweißen ist es wichtig, die genannten Prozessparameter an der Stelle des Schweißprozesses zu kennen. Dies ist vor allem dann schwierig, wenn bei den zu fügenden Bauteilen die Messung von Kraft, Drehmoment oder dergleichen nah am Schweißgeschehen erfolgen muss, wie zum Beispiel bei 3D-Anwendungen, bei denen ansonsten eine aufwendige Kompensation der Gewichtskräfte der Spindel und des Werkzeugs erfolgen muss.

Werden in einem Fertigungsprozess unterschiedliche Werkzeuge für das Rührreibschweißen benötigt, sind bei jedem Werkzeugwechsel unterschiedliche Prozessparameter zu berücksichtigen. Deshalb müssen bei einem Wechsel des Werkzeugs die jeweils erforderlichen Prozessparameter schnell ermittelt werden und es muss die Fertigung sofort auf die veränderten Prozessparameter eingestellt sein.

Der vorliegenden Erfindung liegt deshalb die Aufgabe zugrunde, eine Vorrichtung und ein Verfahren zum schnellen und sicheren Werkzeugwechsel bei dem Vorgang des Rührreibschweißens zu schaffen, wobei ein Werkzeugwechsel schnell durchgeführt werden kann und die maßgebenden Prozessparameter, wie z.B. die auftretende Axialkraft des Werkzeugs, das auftretende Drehmoment und die Temperatur der Schweißpin-Spitze, auch nach einem Werkzeugwechsel schnell und exakt eingestellt werden können.

Erfindungsgemäß wird diese Aufgabe durch die Vorrichtung nach Anspruch 1, bzw. das Verfahren nach Anspruch 6 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig. 1: eine Station für einen schnellen Werkzeugwechsel
Fig.2: den Einsatz eines speziellen Werkzeugs
Fig.3: verschiedene unterschiedliche Werkzeuge für das Rührreibschweißen Fig.4: den Querschnitt einer Werkzeugglocke
Fig.5: eine besondere Ausgestaltung von Schweißschuhen 13
Fig.6: eine Identifizierungsmaßnahme am Pin - Schaft 27

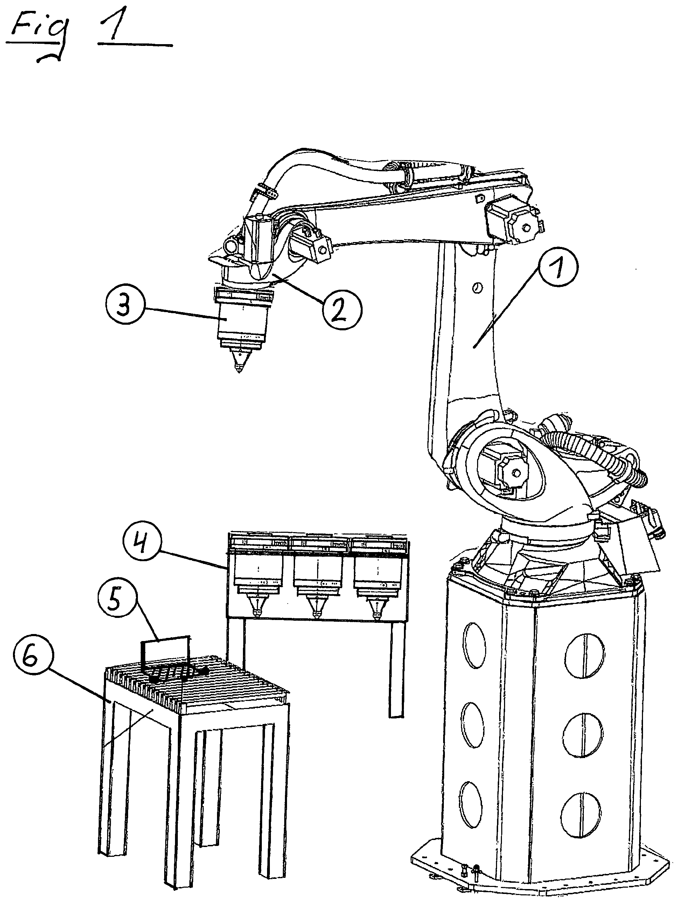

Die Fig.1 zeigt eine Station für einen schnellen Werkzeugwechsel.
Mit 1 ist hier die Grundstruktur eines Roboters mit einem Roboter - Schwenkkopf 2 und einem daran befestigten Reibschweißkopf 3 bezeichnet.
In der Nähe einer Universal Spannvorrichtung 6 zur Aufnahme der zu fügenden Bauteile eines Werkstücks 5 befindet sich ein, entsprechend der beabsichtigten Schweißarbeit ausgestattetes, Werkzeug - Magazin 4.

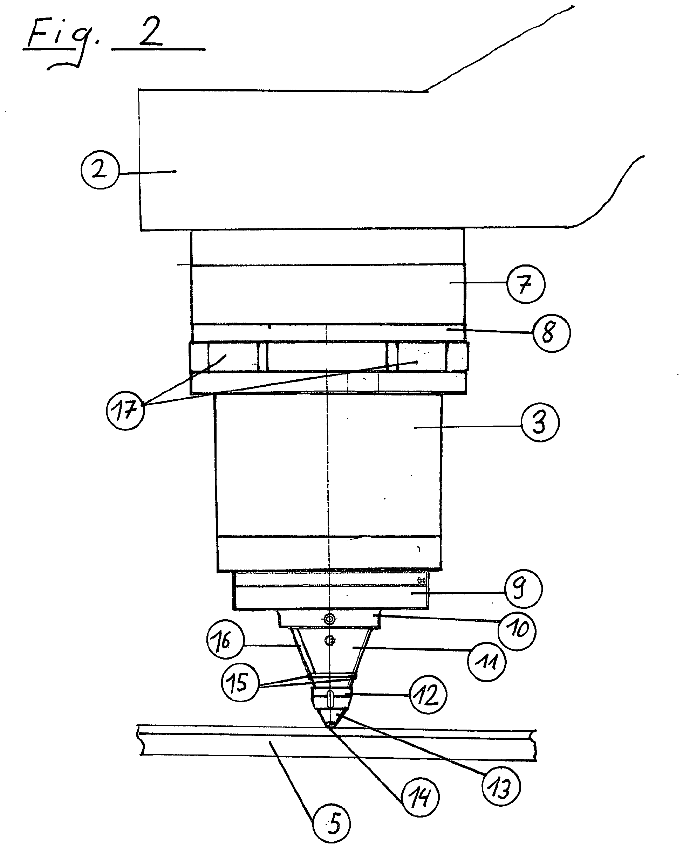

Die Fig.2 zeigt den Einsatz eines speziellen Werkzeugs.
Von oben ist wieder der Roboter - Schwenkkopf 2 zu erkennen, der in dieser Fig.2 mit einer Werkzeugaufnahme und Andockvorrichtung 7 und einer anschließenden Andockplatte 8 für den Reibschweißkopf 3 verbunden ist, wobei zwischen die Andockplatte 8 und den Reibschweißkopf 3 Wegaufnehmer 17 geschaltet sind. Die Wegaufnehmer 17 dienen der Erfassung des an der Andockvorrichtung 7 hängenden Gewichts, im Wesentlichen des Reibschweißkopfes 3.Eine Befestigungsplatte 9 für einen folgenden Werkzeugglocken - Flansch 10 folgt auf den Reibschweißkopf 3 Der Werkzeugglocken - Flansch 10 dient der Halterung einer Werkzeugglocke 11, die mittels einer Überwurfmutter 12 einen Schweißschuh 13 hält.
Im Schweißschuh 13 wird dann eine Schweißpin - Spitze 14 gelagert die am eigentlichen Prozess des Rührreibschweißens mit den zu fügenden Fügepartnern eines Werkstücks 5 teilnimmt.
Als stark herausgezogene Linie ist am linken Rand der Werkzeugglocke 11 ein linienförmiger Sensor 16 zu erkennen, der an der, der Flußrichtung des Schweißprozesses entgegengesetzten Seite der Werkzeugglocke (11) angebracht ist, und bei dem unterhalb ein zugehöriger Messverstärker 15 mit einer, die Mess - Signale weiter vermittelnden Antenne gekennzeichnet ist.

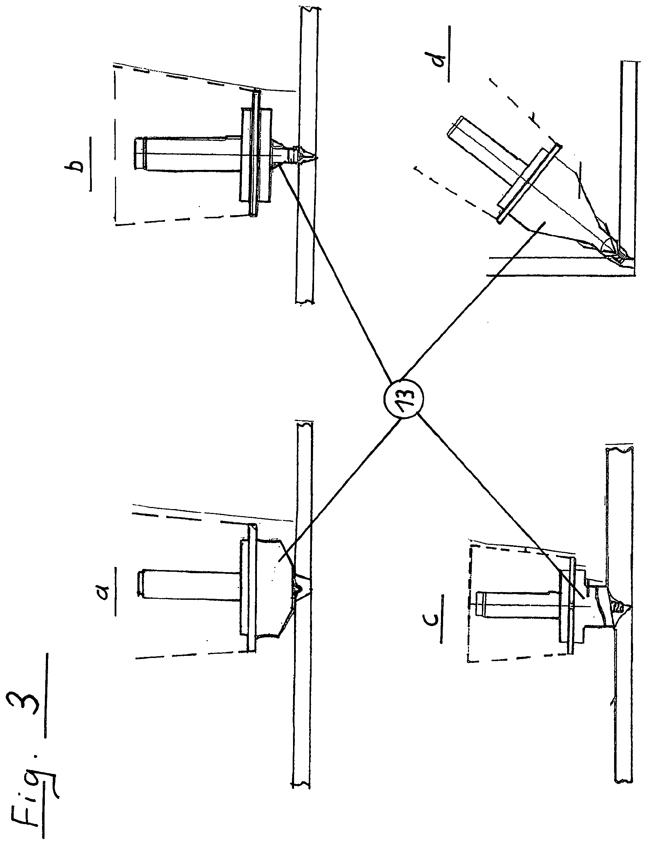

Die Fig.3 zeigt verschiedene unterschiedliche Werkzeuge für das Rührreibschweißen. Hier sind in den Figuren 3a bis 3d verschiedene unterschiedliche Schweißschuhe 13 für unterschiedliche spezielle Schweißprozesse abgebildet. So zeigt beispielsweise die Fig.3c) einen Schweißschuh zur Verarbeitung von Materialien verschiedener Dicke und die Fig.3d) einen Schweißschuh zur Bearbeitung von Kehlnähten.

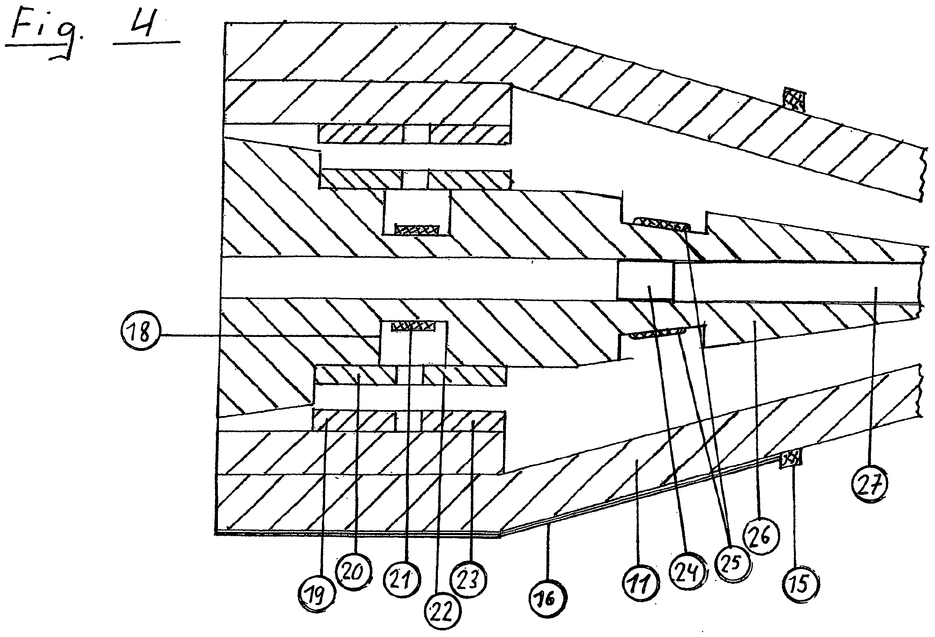

Die Fig.4 zeigt den Querschnitt einer Werkzeugglocke.
Hier ist eine Werkzeugglocke 11 stilisiert im Schnitt mit einem Pin - Aufnahmekegel 26 dargestellt. Auf dieser hier gezeigten unteren Hälfte der Werkzeugglocke 11 sind hier wieder der, schon früher beschriebene Sensor 16 und der zugehörige Verstärker 15 mit seiner Antenne zu sehen.
Der gezeigte Pin - Aufnahmekegel 26 mit seinem Pin - Schaft 27 lässt hierbei in seinem breiteren Bereich eine Kegeltaillierung 18 erkennen die zur Aufnahme eines Sensors 21 dient. Die mechanische Querschnitts - Verengung durch die Kegel - Taillierung 18 und die an dieser Stelle erfolgte Platzierung des Sensors 21 ermöglichen die Messung des am Pin - Aufnahmekegel 26 angreifenden Drehmoments und die Messung eines hier auftretenden Biegemoments.
Die Signalübertragung der von dem Sensor 21 ermittelten Messwerte erfolgt über einen, mit dem Pin - Aufnahmekegel 26 verbunden, drehbaren Signalverstärker 22 und einer Rotorantenne. Der Empfang und die Weiterleitung der von dem Sensor 21 ermittelten Messwerte erfolgt über eine statisch fest stehende Antenne 23.
Im vorderen Bereich des Pin - Aufnahmekegels 26 befindet sich eine weitere, nicht näher bezeichnete, Taillierung, die einem Sensor 25 Raum gibt und die die Messung der auf den Pin - Schaft 27, und damit der Schweißpin - Spitze 14 direkt wirkende Axialkraft ermöglicht.
Optional befindet sich in der Längsachse des Pin - Schafts 27 ein piezoelektrischer Kraft - Mess - Sensor 24 der ebenfalls zur Messung der Axialkraft dient und mittels dessen auch die Längenabmessung einer Schweißpin - Spitze möglich ist.
Zur Stromversorgung der beschriebenen Mess - Systeme dient eine induktive Stromversorgung, deren statische primäre Wicklung mit 19 und deren bewegliche sekundäre Wicklung mit 20 bezeichnet ist. Weiter kann vorgesehen sein, dass während oder nach dem Schweißprozess mittels eines besonderen Anschlusses Zuluft und / oder Reinigungsflüssigkeit zugeführt werden kann.

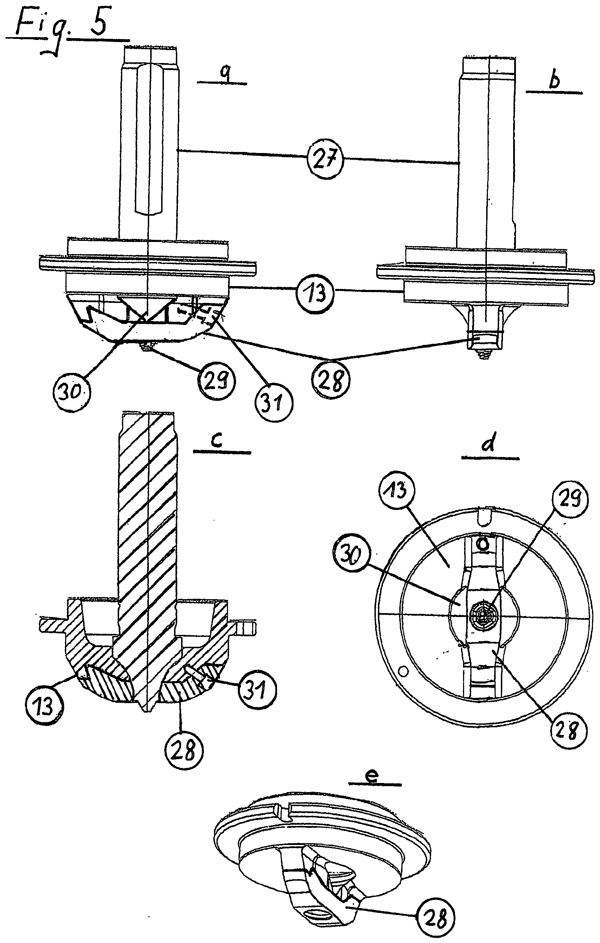

Fig.5: zeigt eine besondere Ausgestaltung von Schweißschuhen 13.
In der Fig. 5a ist eine Seitenansicht eines Schweißschuhs 13 dargestellt, der eine auswechselbare Schweißschuh-Wechselkufe 28 aufweist, wobei auch rotationssymmetrische und plättchenförmige Einsätze vorkommen können. Da das kufenförmige Unterteil eines Schweißschuhs einem Verschleiß unterliegt ist es vorgesehen, dieses kufenförmige Unterteil auswechselbar zu gestalten. Eine solche Schweißschuh-Wechselkufe 28 ist auf der, hier links gezeigten, Seite mit einer nasenförmigen Einrast-Stufe versehen und wird auf der entgegengesetzt liegenden Seite mittels einer lösbaren mechanischen Verbindung 31, zum Beispiel in der Form einer Fixierschraube, befestigt. Weiter sind hier der Pinhals 30 und die Pin-Spitze 29 zu erkennen.
In der Ansicht der Fig. 5b ist derselbe Schweißschuh im rechten Winkel gedreht dargestellt. In beiden Darstellungen ist weiter der Pin-Schaft 27 bezeichnet. In der Fig. 5c ist der Schweißschuh 13 aus der Fig. 5a mit der Schweißschuh-Wechselkufe 28 und der mechanischen Verbindung 31 im Querschnitt zu sehen. Die Fig. 5d zeigt den Schweißschuh 13 aus der Fig. 5b aus der Sicht von der Unterseite her. Hier sind wieder die Schweißschuh-Wechselkufe 28, die Pin-Spitze 29 und der Pinhals 30 bezeichnet. In der Darstellung der Fig. 5e ist der Schweißschuh mit seinem Schweißschuh-Wechselkopf 28 in räumlicher Ansicht schräg von unten zu sehen.

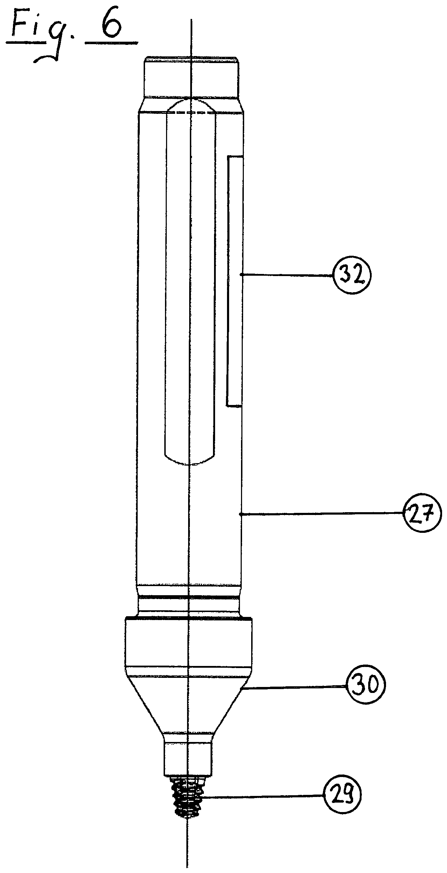

Fig. 6: zeigt eine Identifizierungsmaßnahme am Pin-Schaft 27. Um spezielle Ausfertigungen der erfindungsgemäßen Schweißschuhe identifizieren zu können, ist es vorgesehen jeweils im Pin-Schaft 27 eines solchen Schweißschuhs 13 einen RFID-Code 32 anzubringen. Weiter sind in der Fig. 6 der Pinhals 30 und die Pin-Spitze 29 bezeichnet.
Die komplexe Steuerung der beschriebenen Bewegungsabläufe erfordert ein spezielles Steuerungsprogramm.

### Bezugszeichenliste

- 1: Roboter
- 2: Roboter-Schwenkkopf
- 3: Reibschweißkopf
- 4: Werkzeug-Magazin
- 5: Werkstück
- 6: Universal-Spannvorrichtung zur Werkstück-Aufnahme
- 7: Werkzeugaufnahme und Andockvorrichtung
- 8: Andockplatte für den Reibschweißkopf 3
- 9: Befestigungsplatte für den Werkzeugglocken-Flansch
- 10: Werkzeugglocken-Flansch
- 11: Werkzeugglocke
- 12: Überwurfmutter
- 13: Schweißschuh
- 14: Schweißpin-Spitze
- 15: Verstärker des Mess-Signals einer Werkzeugglocke und Antenne
- 16: Sensor an der Werkzeugglocke (Dehnungsmessstreifen)
- 17: Wegaufnehmer für die Andockplatte 8 des Reibschweißkopfes 3
- 18: Kegeltaillierung zur Aufnahme eines Sensors (elastischer Punkt)
- 19: primäre Wicklung der induktiven Stromversorgung
- 20: sekundäre Wicklung der induktiven Stromversorgung
- 21: Sensor (DMS) für den Werkzeugaufnahmekegel (Pin)
- 22: Sensor-Signalverstärker und Rotorantenne
- 23: statische Antenne
- 24: piezoelektrischer Kraft-Mess-Sensor
- 25: Sensor zur Messung der Axialkraft
- 26: Pin-Aufnahmekegel
- 27: Pin-Schaft
- 28: Schweißschuh-Wechselkufe
- 29: Pin-Spitze
- 30: Pinhals
- 31: lösbare mechanische Verbindung
- 32: RFID-Code

## Patentansprüche

1. Vorrichtung zum schnellen und sicheren Werkzeugwechsel bei dem Vorgang des Rührreibschweißens, mit:
einem Roboter (1) mit einem Roboterschwenkkopf (2) und einem an dem Roboterschwenkkopf (2) befestigten Reibschweißkopf (3) mit einem Schweißschuh (13), wobei der Roboter (1) aus einem Werkzeug-Magazin (4) jeweils einen bestimmten Reibschweißkopf (3) auswählen kann,
**gekennzeichnet durch**
a) eine Vorrichtung zur Erfassung der mechanischen Kräfte an der Schweißpin-Spitze (14) jedes Schweißschuhs (13) eines Reibschweißkopfes (3), wobei ein Sensor (16) an der, der Flußrichtung des Schweißprozesses entgegengesetzten Seite der Werkzeugglocke (11) angebracht ist, wobei ein Sensor (21) zur Messung des am Pin-Aufnahmekegel (26) angreifenden Drehmoments und des hier auftretenden Biegemoments vorgesehen ist, und wobei ferner im Pin-Aufnahmekegel (26) ein Sensor (25) und in der Längsachse eines Pin-Schafts (27) ein piezoelektrischer Kraft-Mess-Sensor (24) zur Messung der auf die Schweißpin-Spitze (14) wirkenden Axialkraft vorgesehen sind,
b) einen an dem Pin-Schaft (27) jedes Schweißschuhs (13) angebrachten RFID-Code zur Identifizierung, und
c) eine an jedem Schweißschuh (13) vorgesehenen Wechselkufe (28) .

2. Vorrichtung nach Anspruch 1, **dadurch gekennzeichnet, dass** der Sensor (16) einen zugehörigen Messverstärker (15) mit einer, die Mess-Signale weiter vermittelnde Antenne, aufweist.

3. Vorrichtung nach einem der vorhergehenden Ansprüche, **dadurch gekennzeichnet, dass** die Werkzeugglocke (11) einen Sensor-Signalverstärker mit einer Rotorantenne (22) zum Empfang, zur Verstärkung und zur Weiterleitung aller erfassten Messwerte aufweist, wobei diese Messwerte von einer statischen Antenne (23) an eine Maschinensteuerung weitergeleitet werden.

4. Vorrichtung nach einem der vorhergehenden Ansprüche, **dadurch gekennzeichnet, dass** die Werkzeugglocke (11) ein induktives Stromversorgungssystem zur Stromversorgung des Mess-Systems aufweist, das aus einer sich bewegenden, sekundären, Wicklung (20) und einer fest stehenden, primären Wicklung (19) und einer diesbezüglichen Stromversorgung besteht.

5. Vorrichtung nach einem der vorhergehenden Ansprüche, **dadurch gekennzeichnet, dass** die Schweißschuh-Wechselkufe (28) an dem jeweiligen Schweißschuh (13) auf der einen Seite mit einer nasenförmigen Einrast-Stufe und auf der anderen Seite mittels einer lösbaren mechanischen Verbindung (31) befestigt ist.

6. Verfahren zum schnellen und sicheren Werkzeugwechsel bei dem Vorgang des Rührreibschweißens, wobei
ein Roboter (1) aus einem Werkzeug-Magazin (4) einen bestimmten, für den folgenden Schweißvorgang geeigneten, Reibschweißkopf (3) für ein, auf einer Universal-Spannvorrichtung (6) aufgespanntes Werkstück (5) auswählt, das Werkzeug-Magazin (4) anfährt, sich mittels einer Werkzeugaufnahme (7) und einer Andockplatte (8) mit dem betreffenden Reibschweißkopf (3) verbindet, und nach Beendigung des Reibschweißvorgangs der Roboter (1) den betreffenden Reibschweißkopf (3) von dem Werkstück entfernt und den Reibschweißkopf (3) wieder in das Werkzeug-Magazin (4) zurücklegt,
**dadurch gekennzeichnet, dass**
a) der Roboter (1) mittels der Wegaufnehmer (17) das Gewicht des angedockten Reibschweißkopfes (3) als Parameter für die Maschinen-Steuerung ermittelt und mit dem Reibschweißkopf (3) zu den, von der Maschinen-Steuerung angegebenen Koordinaten des Beginns des folgenden Schweißprozesses fährt, und
b) während des stattfindenden Schweißprozesses mittels Sensoren (16, 21, 24, 25) die für den Schweißvorgang relevanten physikalischen Messwerte ermittelt und in Echtzeit an die Maschinen-Steuerung des Roboters (1) übermittelt werden, wobei ein Sensor (16) an der, der Flußrichtung des Schweißprozesses entgegengesetzten Seite der Werkzeugglocke (11) angebracht ist, wobei ein Sensor (21) zur Messung des am Pin-Aufnahmekegel (26) angreifenden Drehmoments und des hier auftretenden Biegemoments vorgesehen ist, und wobei ferner im Pin-Aufnahmekegel (26) ein Sensor (25) und in der Längsachse eines Pin-Schafts (27) ein piezoelektrischer Kraft-Mess-Sensor (24) zur Messung der auf die Schweißpin-Spitze wirkenden Axialkraft vorgesehen sind,
wobei an dem Pin-Schaft (27) jedes Schweißschuhs (13) ein RFID-Code (32) zur Identifizierung angebracht ist, und
wobei zum Ändern einer Gleit- und Glättfläche an jedem Schweißschuh (13) ein Auswechseln einer Wechselkufe (28) erfolgen kann.

## Claims

1. Device for quick and reliable tool changing in the process of friction stir welding, having:
a robot (1) having a robotic pivoting head (2) and
a friction-stir welding head (3) which is fastened to the robotic pivoting head (2), having a welding shoe (13), wherein the robot (1) in each case may select a specific friction-stir welding head (3) from a tool magazine (4),
**characterized by**
a) a device for detecting the mechanical forces on the welding-pin tip (14) of each welding shoe (13) of a friction-stir welding head (3), wherein a sensor (16) is attached to that side of the tool bell (11) that is counter to the flow direction of the welding process, wherein a sensor (21) for measuring the torque engaging on the pin receptacle cone (26) and of the bending torque arising here is provided, and wherein furthermore a sensor (25) in the pin receptacle cone (26), and a piezoelectric force-measuring sensor (24) in the longitudinal axis of a pin shaft (27), for measuring the axial force acting on the welding-pin tip (14), are provided,
b) an RFID-code for identification, attached to the pin shaft (27) of each welding shoe (13), and
c) a replacement runner (28) provided on each welding shoe (13).

2. Device according to Claim 1, **characterized in that** the sensor (16) has an associated measurement amplifier (15) having an antenna which relays the measured signals.

3. Device according to one of the preceding claims, **characterized in that** the tool bell (11) has a sensor-signal amplifier having a rotary antenna (22) for receiving, for amplifying, and for relaying all detected measured values, wherein these measured values are routed onward from a static antenna (23) to a machine control unit.

4. Device according to one of the preceding claims, **characterized in that** the tool bell (11) has an inductive power supply system, for supplying power to the measuring system, that is composed of a moving secondary coil (20) and a stationary primary coil (19) and a respective power supply.

5. Device according to one of the preceding claims, **characterized in that** the welding-shoe replacement runner (28) is fastened to the respective welding shoe (13), on the one side by way of a cam-shaped latching step, and on the other side by means of a releasable mechanical connection (31).

6. Method for quick and reliable tool changing in the process of friction stir welding,
a robot (1) selects from a tool magazine (4) a specific friction-stir welding head (3), suitable for the following welding procedure, for a workpiece (5) that is chucked in a universal chucking device (6), approaches the tool magazine (4), by means of a tool receptacle (7) and a docking plate (8) connects to the respective friction-stir welding head (3), and upon termination of the friction-stir welding procedure the robot (1) removes the respective friction-stir welding head (3) from the workpiece, and places the friction-stir welding head (3) back in the tool magazine (4),
**characterized in that**
a) the robot (1) by means of the path reader (17) determines the weight of the docked friction-stir welding head (3) as a parameter for the machine control unit, and moves conjointly with the friction-stir welding head (3) to the coordinates, indicated by the machine control unit, marking the start of the following welding process, and
b) during the running welding process, those physical measured values that are relevant to the welding procedure are determined by means of sensors (16, 21, 24, 25) and are transmitted in real time to the machine control unit of the robot (1), wherein a sensor (16) is attached to that side of the tool bell (11) that is counter to the flow direction of the welding process, wherein a sensor (21) for measuring the torque engaging on the pin receptacle cone (26) and of the bending torque arising here is provided, and wherein furthermore a sensor (25) in the pin receptacle cone (26), and a piezoelectric force-measuring sensor (24) in the longitudinal axis of a pin shaft (27), for measuring the axial force acting on the welding-pin tip, are provided, wherein an RFID code (32) for identification is attached to the pin shaft (27) of each welding shoe (13), and wherein to change a sliding and smoothing face on each welding shoe (13) a replacement of a replacement runner (28) may be performed.

## Revendications

1. Dispositif de changement rapide et fiable d'outil lors d'une opération de soudage par friction-malaxage, avec:
un robot (1) avec une tête de robot pivotante (2) et une tête de soudage par friction (3) fixée à la tête de robot pivotante (2) avec un sabot de soudage (13), dans lequel le robot (1) peut sélectionner dans un magasin d'outils (4) chaque fois une tête de soudage par friction déterminée (3),
**caractérisé par**
a) un dispositif pour déterminer les forces mécaniques sur la pointe de la broche de soudage (14) de chaque sabot de soudage (13) d'une tête de soudage par friction (3), dans lequel un capteur (16) est installé sur le côté du porte-outil (11) opposé à la direction d'exécution du processus de soudage, dans lequel il est prévu un capteur (21) pour la mesure du couple de rotation agissant sur le cône porte-broche (26) et du couple de flexion qui en résulte, et dans lequel il est en outre prévu dans le cône porte-broche (26) un capteur (25) et dans l'axe longitudinal d'une tige de broche (27) un capteur piézoélectrique de mesure de force (24) pour la mesure de la force axiale agissant sur la pointe de la broche de soudage (14),
b) un code RFID d'identification appliqué sur la tige de broche (27) de chaque sabot de soudage (13), et
c) un patin interchangeable (28) prévu sur chaque sabot de soudage (13).

2. Dispositif selon la revendication 1, **caractérisé en ce que** le capteur (16) présente un amplificateur de mesure correspondant (15), avec une antenne retransmettant les signaux de mesure.

3. Dispositif selon l'une quelconque des revendications précédentes, **caractérisé en ce que** le porte-outil (11) présente un amplificateur de signaux de capteur avec une antenne de rotor (22) destinée à recevoir, à amplifier et à retransmettre toutes les valeurs de mesure détectées, dans lequel on retransmet ces valeurs de mesure d'une antenne statique (23) à une commande de machine.

4. Dispositif selon l'une quelconque des revendications précédentes, **caractérisé en ce que** le porte-outil (11) présente un système d'alimentation électrique par induction pour l'alimentation électrique du système de mesure, qui se compose d'un enroulement secondaire mobile (20) et d'un enroulement primaire stationnaire (19) et d'une alimentation électrique respective.

5. Dispositif selon l'une quelconque des revendications précédentes, **caractérisé en ce que** le patin interchangeable (28) du sabot de soudage est fixé sur le sabot de soudage respectif (13) sur un premier côté avec un gradin d'encliquetage en forme d'ergot et sur l'autre côté au moyen d'un assemblage mécanique détachable (31).

6. Procédé de changement rapide et fiable d'outil lors de l'opération de soudage par friction-malaxage, dans lequel
un robot (1) sélectionne dans un magasin d'outils (4) une tête de soudage par friction déterminée (3) convenant pour l'opération de soudage qui suit pour une pièce (5) montée sur un dispositif de serrage universel (6), démarre le magasin d'outils (4), se connecte au moyen d'un logement d'outil (7) et d'une plaque d'appui (8) à la tête de soudage par friction concernée (3), et après la fin de l'opération de soudage par friction le robot (3) retire la tête de soudage par friction concernée (3) de la pièce et replace de nouveau la tête de soudage par friction (3) dans le magasin d'outils (4),
**caractérisé en ce que**
a) le robot (3) détermine au moyen des enregistreurs de course (17) le poids de la tête de soudage par friction appuyée (3) comme paramètre pour la commande de machine et se déplace avec la tête de soudage par friction (3) vers les coordonnées indiquées par la commande de machine du début du processus de soudage suivant, et
b) pendant l'exécution du processus de soudage on détermine au moyen de capteurs (16, 21, 24, 25) les valeurs de mesure physiques pertinentes pour l'opération de soudage et on les transmet en temps réel à la commande de machine du robot (1), dans lequel un capteur (16) est installé sur le côté du porte-outil (11) opposé à la direction d'exécution du processus de soudage, dans lequel il est prévu un capteur (21) pour la mesure du couple de rotation agissant sur le cône porte-broche (26) et du couple de flexion qui en résulte, et dans lequel il est en outre prévu dans le cône porte-broche (26) un capteur (25) et dans l'axe longitudinal d'une tige de broche (27) un capteur piézoélectrique de mesure de force (24) pour la mesure de la force axiale agissant sur la pointe de la broche de soudage (14),
dans lequel un code d'identification RFID (32) est appliqué sur la tige de broche (27) de chaque sabot de soudage (13), et dans lequel on peut effectuer un changement de patin interchangeable (28) pour changer une face de glissement et de lissage sur chaque sabot de soudage (13).
